# EUROPEAN PATENT SPECIFICATION

(11) **EP 0 374 605 B1**
(45) Date of publication and mention of the grant of the patent: **26.01.1994**
(21) Application number: 89122585.6
(22) Date of filing: 07.12.1989
(51) Int. Cl.: B01D 69/10, B01D 71/36, B32B 5/24

(54) **Sterile hydrophobic polytetrafluoroethylene membrane laminate**
Steriles hydrophobes Laminat mit einer Membran aus Polytetrafluorethylen
Stratifié stérile et hydrophobe avec une membrane de polytétrafluoréthylène

(30) Priority: 15.12.1988 US 284514
(43) Date of publication of application: 27.06.1990
(73) Proprietor: MILLIPORE CORPORATION, Bedford Massachusetts 01730 (US)
(72) Inventor: Goldsmith, Paul, Peabody, MA 01960 (US); Keeley, Donald E., Dunstable, MA 01827 (US); Carey, Claire, Framingham, MA 01701 (US); Goel, Vinay, Acton, MA 01720 (US)
(74) Representative: Henkel, Feiler, Hänzel & Partner

(56) References cited:
- EP-A- 0 185 373
- DE-A- 2 737 756
- US-A- 3 778 971
- US-A- 4 402 785
- CHEMICAL ENGINEERING, vol. 93, no. 16, August 1986; J.S. JOHNSON, pp. 121-123#

## Description

### BACKGROUND OF THE INVENTION

This invention relates to a porous, sterile hydrophobic polytetrafluoroethylene (PTFE) membrane laminate product according to the wording of claim 1.

By the term "sterile" as used herein is meant a laminate which is rendered sterile by gamma radiation.

In many applications of membrane technology, it is desirable to utilize a membrane filter which is mechanically strong, is thermally stable, is relatively inert chemically and is insoluble in most organic solvents. It is desirable to provide such membranes which are also hydrophobic so that they are not wet under pressure by solutions including solutions that contain surfactants. Hydrophobic membranes are not permeable to aqueous solutions even under moderate solution pressures and thus such membranes are useful as a seal to aqueous solutions while, at the same time, being permeable to gases.

Prior to the present invention, PTFE membranes have been sterilized with ethylene oxide gas or by gamma radiation. The use of ethylene oxide is undesirable since the gas is toxic and causes a pollution problem.

Gamma radiation also is undesirable since it reduces the mechanical strength of the PTFE membrane so that it is not capable of withstanding moderate pressure in the forward or reverse direction of filtration. Therefore, it would be desirable to provide a sterile PTFE membrane capable of withstanding elevated pressures while avoiding the use of toxic sterilizing compositions.

US-A-4 190 426 discloses a polytetrafluoroethylene (PTFE) filter membrane with a non-woven polyester fiber backing (referred to as "Reemay" backing, see US-A-4 190 426, column 6, lines 55 to 60) which is commercially available from W.L. Gore & Associates, the applicant of DE-A-2 737 756.

The backing material provides a satisfactory seal between the filter membrane component and a methyl acrylic cap of the housing when the heat sealing is carried out at higher temperatures while protecting said cap from melting at said higher temperatures. A sterilization of the composite filter is not considered. The composite filter according to US-A-4 190 426 apparently has been produced according to the teachings of DE-A-2 737 756 by laminating the PFTE filter membrane and the backing while applying higher temperatures and/or pressure.

### SUMMARY OF THE INVENTION

The present invention provides a laminate membrane product which has been sterilized by gamma radiation, the product consisting of a porous polytetrafluoroethylene membrane laminated directly to a gas permeable polyester web, being hydrophobic and having a burst strength of at least 10 psi (68.9 kPa) in both the forward and reverse direction of filtration and having been obtained by winding said membrane and said polyester web on a core with a non-adhesive web which separates adjacent wound layers constisting of said membrane and said polyester web under conditions to effect adherence of said membrane and said web to each other to form a two-layer laminate.

### DESCRIPTION OF SPECIFIC EMBODIMENTS

In accordance with this invention, a PTFE porous membrane is directly laminated on one surface to a porous polyester web. Lamination is achieved directly without the use of an intervening material such as an adhesive Lamination is effected by heating, an interleaved roll of the PTFE membrane, the polyester web and a protective web positioned between one surface of the polyester and one surface of the PTFE wound on a roll at a temperature between about 170°C and 220°C for a time sufficient to effect the lamination, usually between about 30 minutes and 7 hours. The lamination of the polyester web to the porous PTFE membrane is effected so that the entire surface of the porous membrane is laminated to the web otherwise the unlaminated portion of the membrane is mechanically weakened when subsequently exposed to sterilizing gamma radiation. Surprisingly, it has been found that the laminates formed by passing the PTFE membrane and the polyester web between heated rolls under pressure does not produce a mechanically strong product resistant to gamma radiation by passing them in contact with each other between heated rolls under pressure. Generally, the porous PTFE membrane has an average pore size between about 0.001 and 10 microns and more usually between about 0.1 and 5.0 microns. The polyester web can be woven or non-woven so long as it has open pores which permit the passage of gas therethrough.

It is desirable to avoid the use of an adhesive to form the laminate since it has been found that laminates so-produced, when subsequently exposed to sterilizing gamma radiation is mechanically weakened. The laminates of this invention, after being sterilized by exposure to gamma radiation, usually between about 25-50 kGy (2.5 and 5 mega Rad) are capable of withstanding a forward or reverse pressure of at least 10 psi 68,9 kPa. As used herein pressure in the forward direction is applied to the PTFE surface while pressure in the reverse direction is applied to the polyester surface of the laminate. In addition, the sterilized membrane laminates of this invention retain a desirable degree of hydrophobicity such that it is not wet by aqueous solutions including solutions containing a surfactant. The laminates are useful as a gas vent to selectively pass gas therethrough while preventing passage of aqueous liquids therethrough such as in the apparatus described and claimed in US-A-3 854 907 which is incorporated herein by reference. Thus, the laminates of this invention can be utilized as a seal for aqueous liquids. In addition, the laminates of this invention can be utilized as a filter for gases.

### EXAMPLE 1

This example illustrates the method of making the laminate of this invention and that the laminate so-produced is superior to laminates presently available.

A nonwoven polyester web, a PTFE membrane (0.02 micron pore size) and a sheet of paper were interwoven on a 3 inch (76,2 mm) O.D. metal core such that the polyester web and the PTFE membrane were contacted to each other only on one surface to form a roll 7 inches (177,8 mm) in diameter. The roll was heated at 210°C for four hours in a circulating hot air oven. After cooling the roll was unwound and the resulting PTFE-polyester laminate was exposed to 50 kGy (5.0 MRad) of gamma radiation.

Thereafter the laminate was tested to determine whether it remained hydrophobic and whether its mechanical strength was satisfactory. Disks, 13 millimeters in diameter, were cut from the laminate material. The PTFE membrane surface of the laminate was exposed to an aqueous multivitamin solution at a pressure of 15 pounds per square inch (psi) (103,4 kPa) for 96 hours. Thereafter, the laminate disks were tested for resistance to air flow. The laminate retained greater than 75% of its original capacity to pass air. Thereafter, it is suitable as a gas vent membrane.

The mechanical strength of the laminate was evaluated using 13 millimeter diameter disks cut from the laminate material. Air pressure was applied to the polyester support surface of the laminate (reverse direction) and the pressure at which PTFE membrane burst was recorded. The average burst strength of the membrane in the reverse direction was 24 psi (165,5 kPa). In order to be used as a gas vent membrane, the burst strength of the laminate in the reverse direction must be at least 10 psi (68,9 kPa). The average burst strength in the forward direction was greater than 50 psi (344,7 kPa).

In contrast, a laminate membrane comprising a PTFE membrane (0.02 micron pore size) adhered with an adhesive to a polyester support after being irradiated with 50 kGy (5.0 MRad) of gamma radiation had a burst strength in the reverse direction of 7 psi (48,3 kPa) under the test conditions set forth above. Thus, these laminate membranes were not useful as gas vent membranes.

### EXAMPLE 2

The laminate preparation described in Example 1 was repeated using a PTFE membrane with a pore size of 0.2 microns, an oven temperature of 222°C and oven times of 6 hours. The resulting PTFE-polyester membrane laminate was exposed to 50 kGy (5.0 MRad) of gamma radiation.

The hydrophobic nature and the mechanical strength of the laminate were evaluated as described in Example 1. After exposure to an aqueous multivitamin solution at 15 psi (103,4 kPa) for 96 hours, the laminate retained greater than 75% of its original airflow. The average burst strength of the laminate was 21 psi (144,8 kPa). Both of these test results show that this laminate is a successful vent membrane.

### EXAMPLE 3

This example illustrates that a PTFE membrane laminate produced by a conventional heat lamination process wherein the laminate is exposed to gamma radiation does not produce a product having satisfactory mechanical strength. A polytetrafluoroethylene membrane (FGUP) is placed on top of nonwoven polyester support material (Hollytex 3252, registered trademark). This two layer substrate was fed into a nip roll laminator using either one of two following process conditions:

| | |
|---|---|
| Temperature: | 204°C |
| Line Speed: | 4 Feet/minute |
| Residence Time on Heated Roll: | 7.5 seconds. |

or

| | |
|---|---|
| Temperature: | 210°C |
| Line Speed: | 4.3 Feet/minute |
| Pressure: | 50 Newtons/square centimeter |
| Residence Time on Heated Roll: | 46 seconds. |

The membrane laminate produced under either process conditions had no mechanical strength after exposure to 50kGy (5 Mega Rads) of gamma radiation.

### EXAMPLE 4

A polytetrafluoroethylene membrane (FGUP), a nonwoven polyester (Hollytex 3252, registered trademark) and a paper web capable of withstanding high temperature were interleaved on an aluminum core using the following process conditions:

| | |
|---|---|
| Unwind Tensions: | 25 pounds (11,34 kg) |
| Nip Pressure: | 40 pounds/square inch (275,8 kPa) |
| Roll Length: | 180 feet (54,9 m) |

This roll was placed in a circulating hot air oven at 220 degree C for 6 hours, followed by rewinding and removal of the paper.

The membrane laminate produced with this process could withstand greater than 50 one second pulses of 10 psi (68,9 kPa) pressure in the reverse direction after exposure to 50 kGy (5 MegaRads) of gamma radiation.

## Claims

1. A laminate membrane product which has been sterilized by gamma radiation, the product consisting of a porous polytetrafluoroethylene membrane laminated directly to a gas permeable polyester web, being hydrophobic and having a burst strength of at least 10 psi (68.9 kPa) in both the forward and reverse direction of filtration and having been obtained by winding said membrane and said polyester web on a core with a non-adhesive web which separates adjacent wound layers consisting of said membrane and said polyester web under conditions to effect adherence of said membrane and said web to each other to form a two-layer laminate.

2. The laminate of claim 1 wherein said polyester web is a woven web.

3. The laminate of claim 1 wherein said polyester web is a nonwoven web.

## Patentansprüche

1. Durch Gammastrahlung sterilisiertes Verbundgebildemembranprodukt, das aus einer direkt auf ein gaspermeables Polyestergewebe laminierten porösen Polytetrafluorethylenmembran besteht, hydrophob ist und eine Berstfestigkeit von mindestens 10 psi (68,9 kPa) sowohl in Vorwärts- als auch in Rückwärtsrichtung der Filtration aufweist und durch Aufwickeln der Membran und des Polyestergewebes auf einen Kern mit einem nicht-haftenden Gewebe, das bei Bedingungen, die eine Haftung der Membran und des Gewebes aneinander unter Bildung eines zweischichtigen Verbundgebildes bewirkent, aus der Membran und dem Polyestergewebe bestehende benachbarte aufgewickelte Schichten trennt, erhalten worden ist.

2. Verbundgebilde nach Anspruch 1, wobei das Polyestergewebe aus einem Gewebe besteht.

3. Verbundgebilde nach Anspruch 1, wobei das Polyestergewebe aus einem Flies besteht.

## Revendications

1. Produit stratifié à membrane de base, stérilisé aux rayons gamma, constitué par une membrane poreuse de polytétrafluoréthylène directement laminée sur une nappe de polyester perméable aux gaz, ce produit étant hydrophobe et présentant une résistance à l'éclatement d'au moins 68,9 kPa (10 psi) aussi bien dans le sens du filtrage que dans le sens inverse, ce produit étant réalisé en enroulant ensemble la membrane en question et la nappe de polyester sur un noyau de bobinage avec une nappe intercalaire non-adhésive pour séparer les épaisseurs adjacentes ainsi enroulées et constituées par la membrane appliquée sur la nappe de polyester dans des conditions propres à assurer l'adhérence mutuelle de cette membrane et de la nappe associée pour former un produit stratifié à deux couches.

2. Produit stratifié selon la revendication 1, caractérisé en ce que la nappe de polyester est une nappe tissée.

3. Produit stratifié selon la revendication 1, caractérisé en ce que la nappe de polyester est une nappe non-tissée.
